# DEMANDE DE BREVET EUROPEEN

(11) **EP 4 086 445 A1**
(43) Date de publication de la demande: **09.11.2022**
(21) Numéro de dépôt: 22171666.5
(22) Date de dépôt: 04.05.2022
(51) Int. Cl.: F02C 7/14, F02C 7/18

(54) **DISPOSITIF D'ECHANGE DE CHALEUR ET TURBOMACHINE D'AERONEF AVEC LE DISPOSITIF**

(30) Priorité: 06.05.2021 BE 202105368
(71) Demandeur: Safran Aero Boosters, 4041 Herstal (BE)
(72) Inventeur: AYOUB, Gilles, 4041 Herstal (BE); WEICKER, David, 4041 Herstal (BE); CARRE, Alexandre, 4041 Herstal (BE); PRINCIVALLE, Rémy Henri Pierre, 4041 Herstal (BE)
(74) Mandataire: Gevers Patents

(57) **Abrégé**

L'invention concerne un dispositif (1) d'échange de chaleur pour une turbomachine d'aéronef comprenant
- un échangeur (10) de chaleur,
- une écope d'entrée (12) avec une arrivée d'air (14) destinée à alimenter l'échangeur (10) de chaleur,
l'arrivée d'air (14) de l'écope d'entrée (12) est divisée en plusieurs embouchures (161, 162, 163) définissant chacune un flux d'air d'alimentation de l'échangeur (10).

## Description

### Domaine technique

La présente invention concerne un dispositif d'échange de chaleur et une turbomachine d'aéronef avec le dispositif d'échange de chaleur.

### Art antérieur

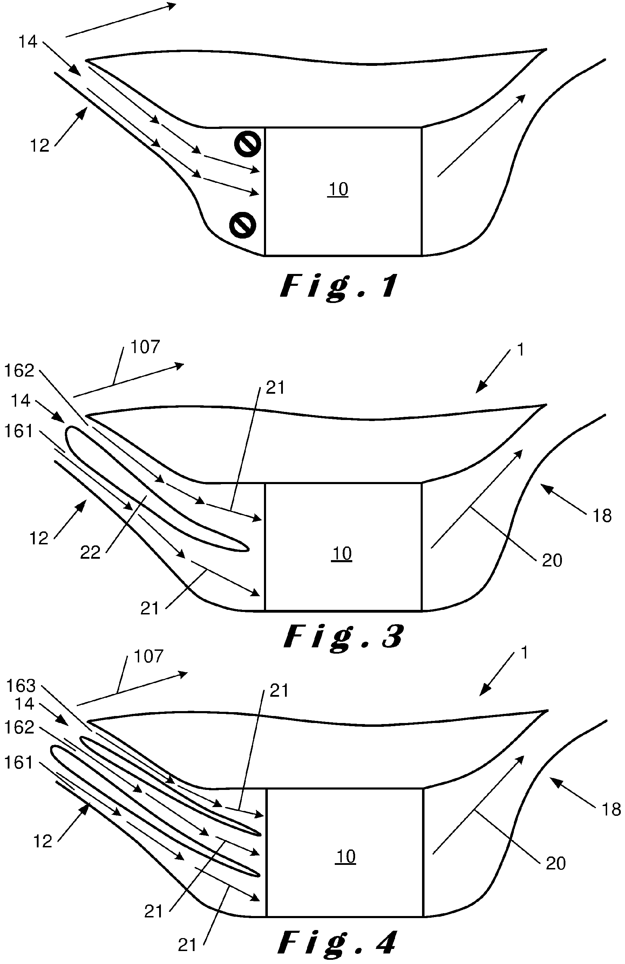

Il existe des échangeurs dit en écope, c'est-à-dire prélevant une partie de l'air du flux secondaire et réinjectant l'air passé dans un échangeur de chaleur dans ce flux secondaire. Selon la figure 1, un tel échangeur 10 est alimenté en air via une écope d'entrée 12. L'écope étant abrupte, le profil de vitesse d'air en entrée d'échangeur 10 est déséquilibré selon la hauteur de l'échangeur ; le profil de vitesse est notamment important au centre de l'échangeur mais pas sur le haut et le bas de l'échangeur de la figure 1.

L'inconvénient de ces dispositifs est que le déséquilibre causé par le gradient de vitesse de l'air en entrée d'échangeur ne permet pas une maximisation de la chaleur échangée dans l'échangeur, pas assez d'air entrant dans l'ensemble de l'échangeur.

Il y a un besoin pour un dispositif d'échange de chaleur qui soit plus performant.

### Exposé de l'invention

À cet effet, l'invention propose un dispositif d'échange de chaleur pour une turbomachine d'aéronef comprenant un échangeur de chaleur, une écope d'entrée avec une arrivée d'air destinée à alimenter l'échangeur de chaleur, l'arrivée d'air de l'écope d'entrée est divisée en plusieurs embouchures définissant chacune un flux d'air d'alimentation de l'échangeur.

Selon une variante, le dispositif d'échange de chaleur comprend en outre un ou des profils de séparation dans l'écope d'entrée, le ou les profils de séparation divisant l'arrivée d'air de l'écope d'entrées en lesdites plusieurs embouchures.

Selon une variante, le ou les profils de séparation délimitent des canaux de flux d'air dans l'écope d'entrée pour chaque embouchure.

Selon une variante, le ou les profils de séparation sont fixés sur la paroi de l'écope d'entrée.

Selon une variante, chaque embouchure est sélectivement ouverte ou fermée, par des clapets.

Selon une variante, l'échangeur est de type air-huile.

Selon une variante, le dispositif d'échange de chaleur comprend en outre, en sortie de l'échangeur de chaleur, une écope de sortie.

L'invention se rapporte aussi à une turbomachine d'aéronef comprenant le dispositif d'échange de chaleur tel que décrit précédemment et une veine de flux d'air destinée à générer une réaction de poussée nécessaire au vol de l'aéronef, l'arrivée d'air de l'écope d'entrée étant apte à prélever de l'air dans la veine de flux d'air.

Selon une variante, la turbomachine comprend en outre des étages de compression, de combustion et de turbines et une paroi délimitant à l'intérieur une veine de flux primaire et à l'extérieur la veine de flux secondaire, le dispositif d'échange de chaleur étant dans la paroi.

Selon une variante, l'embouchure la plus en amont dans le sens d'écoulement de l'air dans la veine de flux d'air est radialement la plus basse.

L'usage, dans ce document, du verbe « comprendre », de ses variantes, ainsi que ses conjugaisons, ne peut en aucune façon exclure la présence d'éléments autres que ceux mentionnés. L'usage, dans ce document, de l'article indéfini « un », « une », ou de l'article défini « le », « la » ou « l' », pour introduire un élément n'exclut pas la présence d'une pluralité de ces éléments.

Les termes « premier », « deuxième », « troisième », etc. sont, quant à eux, utilisés dans le cadre de ce document exclusivement pour différencier différents éléments, et ce sans impliquer d'ordre entre ces éléments.

### Brève description des figures

D'autres caractéristiques et avantages de la présente invention apparaîtront à la lecture de la description détaillée qui suit pour la compréhension de laquelle on se reportera aux figures annexées qui montrent :
- la figure 1, une vue schématique d'un échangeur selon l'état de la technique ;
- la figure 2, une vue schématique d'une turbomachine ;
- la figure 3, une vue schématique d'un exemple de réalisation du dispositif d'échange de chaleur selon l'invention ;
- la figure 4, une vue schématique d'un autre exemple de réalisation du dispositif d'échange de chaleur selon l'invention.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation de l'invention

L'invention se rapporte à un dispositif d'échange de chaleur pour une turbomachine d'aéronef comprenant un échangeur de chaleur, une écope d'entrée avec une arrivée d'air destinée à alimenter l'échangeur de chaleur, l'arrivée d'air de l'écope d'entrée est divisée en plusieurs embouchures définissant chacune un flux d'air d'alimentation de l'échangeur. Ceci permet de diviser l'écope d'entrée dès l'arrivée d'air afin de diviser le gradient de vitesse en entrée pour limiter l'inhomogénéité de la vitesse de l'air en amont de l'échangeur. La vitesse de l'air en entrée de l'échangeur étant plus homogène, ceci permet de maximiser l'échange thermique au sein de l'échangeur.

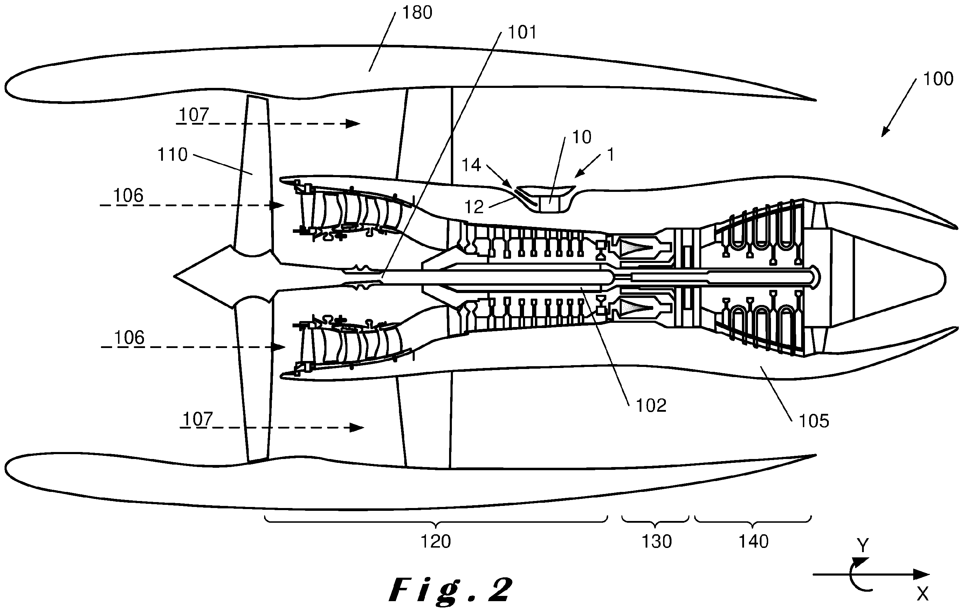

La figure 2 illustre un exemple d'une coupe d'une turbomachine d'aéronef 100 sur laquelle il est prévu d'intégrer un dispositif 1 d'échange de chaleur selon l'invention. Il s'agit plus précisément d'une turbomachine axiale à double flux comprenant à titre d'exemple de façon successive, le long de l'axe X de la turbomachine 100 , une soufflante 110, un étage de compression 120 (comprenant, possiblement, un compresseur basse pression et un compresseur haute pression), un étage de combustion 130 et un étage de turbines 140 (comprenant, possiblement, une turbine haute pression et une turbine basse pression). Ces éléments sont connus d'un homme du métier. En fonctionnement, la puissance mécanique de l'étage de turbines 140 est transmise via des arbres 101 et 102 à l'étage de compression 120, ainsi qu'à la soufflante 110 via l'arbre 101. Les rotors de l'étage de compression tournent selon Y autour de l'axe X de la turbomachine 100 leur permettant d'aspirer et de comprimer de l'air pour l'amener à des vitesses, pressions et températures adaptées, jusqu'à l'entrée de l'étage de combustion 130. La soufflante 110 permet de générer des flux d'air dans une veine de flux d'air primaire 106 et une veine de flux d'air secondaire 107 en amont de l'étage de compression 120. Le flux d'air dans la veine de flux d'air primaire 106 est principalement destiné à traverser axialement la turbomachine d'aéronef 100, alimentant par cette occasion l'étage de combustion 130 ; le flux d'air dans la veine de flux d'air secondaire 107 est principalement destiné à générer une réaction de poussée nécessaire au vol de l'aéronef. Un carter interne 105 délimite à l'intérieur la veine de flux primaire 106 et à l'extérieur la veine de flux secondaire 107, l'écope d'entrée 12 et l'échangeur 10 étant par exemple dans le carter interne 105. La veine de flux secondaire 107 est comprise entre le carter interne 105 et le carter externe 180 de la nacelle.

La figure 3 montre une vue schématique d'un exemple de réalisation du dispositif 1 d'échange de chaleur. Le dispositif 1 comprend un échangeur 10 de chaleur. L'échangeur 10 permet le refroidissement de certains éléments de la turbomachine. Par exemple l'échangeur 10 est de type air-huile permettant de refroidir des circuits d'huile de la turbomachine 100 à l'aide de l'air y circulant.

Afin d'alimenter en air l'échangeur 10 de chaleur, il est par exemple possible de prélever de l'air circulant dans une veine de flux d'air, par exemple la veine de flux d'air secondaire 107. A cet effet, le dispositif 1 peut comprendre une écope 12 permettant de dévier de l'air de la veine de flux d'air secondaire 107 en direction de l'échangeur 10. L'écope 12 comprend une arrivée d'air 14 destinée à alimenter l'échangeur 10 en air, depuis la veine de flux d'air secondaire 107. En sortie de l'échangeur 10 de chaleur, le dispositif 1 comprend une écope de sortie 18 adaptée à renvoyer l'air vers la veine de flux secondaire 107, selon la flèche 20 sur la figure 3. Le dispositif 1 comprenant l'écope d'entrée 12, l'échangeur 10 et l'écope de sortie 18 est par exemple dans le carter interne 105 comprenant notamment les étages de compression et de combustion. Le dispositif 1, et en particulier l'échangeur 10, sont par exemple enterrés dans le carter interne 105.

En raison de l'encombrement de l'échangeur 10 enterré dans le carter interne 105, l'écope d'entrée 12 présente une forte pente pour acheminer l'air vers l'échangeur 10. Pour éviter qu'une telle pente génère un gradient de vitesse en entrée d'échangeur 10, et donc une alimentation en air inégale sur la hauteur de l'échangeur 10, l'arrivée d'air 14 de l'écope d'entrée 12 est divisée en plusieurs embouchures 161, 162 définissant chacune un flux d'air alimentant l'échangeur 10. La division de l'écope d'entrée 12 en plusieurs embouchures est directement à l'arrivée d'air 14. La division de l'écope d'entrée 12 en plusieurs embouchures est immédiatement à l'arrivée d'air 14. Les flux d'air définis à l'arrivée d'air 14 de l'écope d'entrée s'étendent jusqu'à l'échangeur. En d'autres termes, il y a plusieurs flux d'air alimentant l'échangeur, depuis l'arrivée d'air 14 de l'écope. L'écope comprend des flux d'air distincts depuis l'entrée de l'écope jusqu'à l'échangeur. Ainsi, l'ensemble de l'écope est divisée en flux d'air distincts. La division de l'écope d'entrée 12 (d'une part) en plusieurs embouchures (et d'autre part) dès l'arrivée de l'air 14 permet d'éviter la création de gradient de vitesse en aval dans l'écope d'entrée 12. La division de l'écope dès l'arrivée d'air 14 permet aussi d'éviter l'atteinte par l'air de la division avec un gradient déjà formé (ce qui est le cas dans l'art antérieur lorsque la division est plus en aval dans l'écope). Ceci permet d'obtenir un profil de vitesse en entrée d'air d'échangeur qui est équilibré, sur la hauteur de l'échangeur, notamment sur le haut et le bas de l'échangeur. Ceci permet d'obtenir un profil de vitesse en entrée d'air d'échangeur qui est homogène, sur la hauteur de l'échangeur, notamment sur le haut et le bas de l'échangeur. Ceci permet d'alimenter l'échangeur 10 de manière mieux répartie sur sa hauteur selon les flèches 21 ; on maximise ainsi l'échange de chaleur au sein de l'échangeur 10.

Deux embouchures 161, 162 sont illustrées à titre d'exemple sur la figure 3. En divisant en deux l'arrivée d'air de l'écope d'entrée (donc dès la déviation de l'air dans le dispositif 1), on divise en deux le gradient à l'entrée de l'échangeur; l'inhomogénéité de vitesse importante causée par la forte pente de l'écope d'entrée 12 avant l'échangeur 10 est ainsi limitée. Ceci permet d'obtenir un profil de vitesse en entrée d'air d'échangeur 10 qui est équilibré sur la hauteur de l'échangeur 10, notamment sur le haut et le bas de l'échangeur. On obtient une amélioration de l'alimentation en air de l'échangeur 10 en vue de maximiser l'échange entre l'air et l'huile dans le cas d'un échangeur air-huile.

L'arrivée d'air 14 débouche par exemple dans la veine de flux d'air secondaire 107. L'arrivée d'air 14 est divisée de telle sorte que les embouchures 161, 162 soient alignées dans le sens d'écoulement de l'air, une embouchure, 161, étant plus en amont dans le flux d'air que l'autre embouchure, 162. Le carter interne 105 présentant une section transversale aux veines de flux d'air 106 et 107 qui est circulaire, les embouchures 161, 162 dans le carter interne sont telles que l'embouchure 161 la plus en amont est alors radialement plus basse que l'embouchure 162. Ceci permet qu'un flux d'air avec une vitesse suffisante entre par l'embouchure 162 plus en aval et que l'échangeur 10 soit alimenté de manière plus homogène.

La figure 3 montre la division de l'arrivée d'air 14 en deux embouchures, mais on peut multiplier les embouchures en fonction des caractéristiques de l'échangeur 10. La figure 4 montre un autre exemple de réalisation du dispositif 1 d'échange de chaleur avec les mêmes avantages, selon lequel l'arrivée d'air 14 est divisée en trois embouchures 161, 162, 163. De même que sur la figure 3, l'arrivée d'air 14 de la figure 4 est divisée de telle sorte que les embouchures 161, 162, 163 soient alignées dans le sens d'écoulement de l'air ; l'embouchure 161 est plus en amont dans le flux d'air que l'embouchure 162, elle-même plus en amont que l'embouchure 163. Les embouchures 161, 162, 163 dans la paroi du carter interne 105 sont telles que l'embouchure 161 la plus en amont est alors radialement plus basse que l'embouchure 162, elle-même plus basse que l'embouchure 163. Ceci permet qu'un flux d'air avec une vitesse suffisante entre par chacune des embouchures 162, 163 plus en aval et que l'échangeur 10 soit alimenté de manière plus homogène selon les flèches 21. La division de l'arrivée d'air de l'écope d'entrée permet en définitive de créer une double écope lorsqu'il y a deux embouchures (comme sur la figure 3) ou plus généralement, lorsqu'il y a plus d'embouchures encore (comme sur la figure 4), de créer une multi-écope d'entrée.

Le dispositif 1 d'échange de chaleur peut comprendre en outre un ou des profils de séparation 22 dans l'écope 12. Le ou les profils de séparation 22 divisent l'arrivée d'air 14 de l'écope 12 en plusieurs embouchures. Les profils de séparation 22 permettent la division de l'écope d'entrée 12 à son arrivée d'air 14 et guident les flux d'air définis à chaque embouchure jusqu'à l'échangeur 10. Les flux d'air étant guidés tout le long de l'écope d'entrée 12, les vitesses d'air sont homogènes à l'entrée de l'échangeur 10. Les profils de séparation 22 délimitent ainsi des canaux de flux d'air dans l'écope d'entrée 12, pour chaque embouchure. Selon la figure 3, un profil de séparation 22 est présent dans l'écope d'entrée 12, divisant en deux embouchures 161, 162 l'arrivée d'air 14 et délimitant deux canaux de flux d'air entre l'arrivée d'air 14 et l'échangeur 10. Selon la figure 4, deux profils de séparation 22 sont présents dans l'écope d'entrée 12, divisant en trois embouchures 161, 162, 163 l'arrivée d'air 14 et délimitant trois canaux de flux d'air entre l'arrivée d'air 14 et l'échangeur 10.

Les profils de séparation 22 sont fixés à la paroi de l'écope d'entrée 12 et s'étendent sur toute la largeur de l'échangeur 10. Le profil aérodynamique des profils de séparation est prévu de sorte à limiter les turbulences au sein de l'écope d'entrée 12 ; par exemple, les profils de séparation 22 peuvent avoir une forme d'aile d'aéronef. Les profils de séparation 22 peuvent aussi être conformés de sorte à suivre le profil de l'écope d'entrée 12 et la trajectoire des flux d'air dans l'écope d'entrée 12 obtenus à l'arrivée d'air 14. Notamment, les profils de séparation 22 peuvent être conformés pour suivre le profil abrupte de l'écope d'entrée 12.

Il est aussi possible d'ouvrir ou fermer sélectivement les embouchures 161, 162, 163 en fonction des besoins d'échange thermique de la turbomachine 100. Les flux d'air au sein de l'écope d'entrée 12 peuvent ainsi être créés ou éteints. Les canaux définis dans l'écope d'entrée 12 peuvent ainsi être sélectivement ouverts ou obstrués. Cela donne alors un échangeur adaptatif, qui prélève le flux d'air au plus juste, en guidant les flux d'air vers les embouchures ouvertes. L'ouverture ou la fermeture sélective des embouchures 161, 162, 163 est par exemple obtenue par des clapets.

La turbomachine peut comprendre plusieurs dispositifs 1 d'échange de chaleur, l'arrivée de l'air des écopes d'entrée étant divisée comme cela a été décrit. Les dispositifs 1 peuvent être répartis dans le sens de l'écoulement d'air dans la veine de flux d'air, par exemple secondaire, et/ou selon la circonférence du carter interne 105. Le dispositif 1 peut aussi être positionné en d'autres endroits de la turbomachine et prélever de l'air en d'autres veines de circulation d'air que la veine de flux d'air secondaire.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limitée aux exemples illustrés et/ou décrits ci-dessus.

## Revendications

1. Dispositif (1) d'échange de chaleur pour une turbomachine d'aéronef comprenant
- un échangeur (10) de chaleur,
- une écope d'entrée (12) avec une arrivée d'air (14) destinée à alimenter l'échangeur (10) de chaleur,
l'arrivée d'air (14) de l'écope d'entrée (12) est divisée en plusieurs embouchures (161, 162, 163) définissant chacune un flux d'air d'alimentation de l'échangeur (10).

2. Dispositif (1) d'échange de chaleur selon la revendication 1, comprenant en outre un ou des profils de séparation (22) dans l'écope d'entrée (12), le ou les profils de séparation (22) divisant l'arrivée d'air (14) de l'écope d'entrées (12) en lesdites plusieurs embouchures (161, 162, 163).

3. Dispositif (1) d'échange de chaleur selon la revendication précédente, dans lequel le ou les profils de séparation (22) délimitent des canaux de flux d'air dans l'écope d'entrée (12) pour chaque embouchure (161, 162, 163).

4. Dispositif (1) d'échange de chaleur selon la revendication 2 ou 3, dans lequel le ou les profils de séparation (22) sont fixés sur la paroi de l'écope d'entrée (12).

5. Dispositif (1) d'échange de chaleur selon l'une des revendications précédentes, dans lequel chaque embouchure (161, 162, 163) est sélectivement ouverte ou fermée, par des clapets.

6. Dispositif (1) d'échange de chaleur selon l'une des revendications précédentes, dans lequel l'échangeur (10) est de type air-huile.

7. Dispositif (1) d'échange de chaleur selon l'une des revendications précédentes, comprenant en outre, en sortie de l'échangeur (10) de chaleur, une écope de sortie (18).

8. Turbomachine (100) d'aéronef comprenant le dispositif (1) d'échange de chaleur selon l'une des revendications précédentes et une veine de flux d'air (107) destinée à générer une réaction de poussée nécessaire au vol de l'aéronef, l'arrivée d'air (14) de l'écope d'entrée (12) étant apte à prélever de l'air dans la veine de flux d'air (107).

9. Turbomachine (100) selon la revendication précédente, comprenant en outre des étages de compression, de combustion et de turbines et une paroi délimitant à l'intérieur une veine de flux primaire (106) et à l'extérieur la veine de flux secondaire (107), le dispositif (1) d'échange de chaleur étant dans la paroi.

10. Turbomachine (100) selon la revendication 8 ou 9, dans laquelle l'embouchure (161) la plus en amont dans le sens d'écoulement d'air dans la veine de flux d'air (107) est radialement la plus basse.
